# EUROPEAN PATENT APPLICATION

(11) **EP 0 539 880 A1**
(43) Date of publication of application: **05.05.1993**
(21) Application number: 92118168.1
(22) Date of filing: 23.10.1992
(51) Int. Cl.: G05B 19/05

(54) **Programmable computer controller**

(30) Priority: 30.10.1991 JP 313989/91
(71) Applicant: LOGIC CORPORATION, Minato-ku, Tokyo 108 (JP)
(72) Inventor: Shigematsu, Hisashi, Minato-ku, Tokyo 108 (JP)
(74) Representative: Kügele, Bernhard

(57) **Abstract**

This invention offers a programmable computer controller that is well suited for manufacturing administration, which is to be provided in addition to machine control.

The programmable computer controller 1 of this invention has a control means 4, which provides a logical operation or other control operation using the input information from control equipment and/or computer means 5 as data under the control program stored and held and puts out the result to the control equipment and/or computer means 5 ; a computer means 5, which generates data on the basis of the data put in from input equipment or the said control means 4 under the computer program activated by controlling by the said control means 4 and puts out the generated data to the said control means 4 or output equipment : and a control means which is provided for information communications between the said control means 4 and computer means 5 and makes operation control including data processing for both the said control means 4 and computer means 5.

## Description

### BACKGROUND OF THE INVENTION

### FIELD OF THE INVENTION

This invention relates to a programmable computer controller well suited for use on the site of FA (Factory Automation) or at the FA plant.

### PRIOR ART

Originally developed for use as a unit to control machines, the PLC (Programmable Logic Controller) has been widely and rapidly accepted by the market due to its convenience and low cost in the recent years, and the industry trends toward manufacture of two different types of units ; low cost and enhanced function ones.

The industry aims at providing high speed, enhanced function for processing operations such as numerical value computation and data base administration, and enhanced function man-machine interfaces.

The enhanced function demand of the man-machine interface ranges from that for machine control, which is the initial purpose for introduction of the PLC into the market, to that for manufacturing administration, which is an added purpose.

However, providing enhanced function for processing and interface operations involves more complicated and enlarged programs for more complex processing, which results in too long a time period for processing or large variations in processing time. Thus, it has been difficult to realize a product of practical use.

Therefore, at present, as a way to meet the demand for enhanced function for processing, a PLC for machine control connected by a net work to a general-purpose computer (personal computer or work station) or a special computer is used to build a system for running a manufacturing administration program which is designed by a programming specialist for use in a particular application.

However, for efficient manufacturing administration on an FA site or at an FA plant, it is requested that, when the system as stated above is to be improved or changed, or a problem is encountered or found, even a person in charge of manufacturing administration on the site can easily service the system as with the PLC, thus the need for calling the programming specialist being eliminated.

Consequently, it has been a problem that the way of system building as stated above cannot meet the demand for enhanced function processing in manufacturing administration.

### SUMMARY OF THE INVENTION

This invention is provided in consideration of the above-stated situation, and intends to solve the problem of realizing an enhanced function and offer a programmable computer controller that can be used in the same way and on the same philosophy as conventional PLCs, being well suited for manufacturing administration, which is to be provided in addition to machine control.

The programmable computer controller 1 of this invention has a control means 4, which provides a logical operation or other control operation using the input information from control equipment and/or computer means 5 as data under the control program stored and held and puts out the result to the control equipment and/or computer means 5 ; a computer means 5, which generates data on the basis of the data put in from input equipment or the said control means 4 under the computer program activated by controlling by the said control means 4 and puts out the generated data to the said control means 4 or output equipment : and a control means which is provided for information communications between the said control means 4 and computer means 5 and makes operation control including data processing for both the said control means 4 and computer means 5.

### BRIEF DESCRIPTION OF THE DRAWING

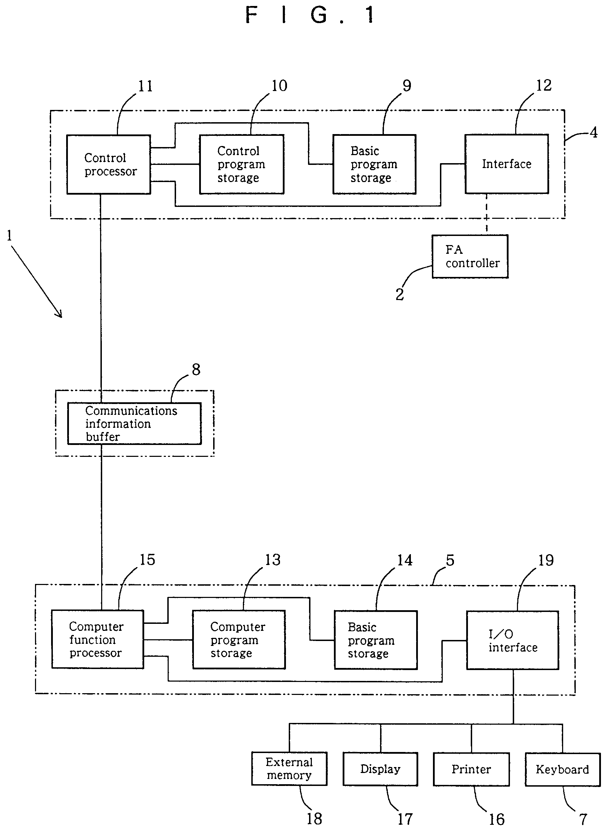

Fig. 1 is a block diagram of the system which is an embodiment of this invention.

### DETAILED DESCRIPTION OF THE INVENTION

The invention stated in the claim 1 provides a programmable computer controller which features having a control means, which provides a logical operation or other control operation using the input information from control equipment and/or computer means as data under the control program stored and held, and puts out the result to the control equipment and/or computer means ; a computer means, which generates data on the basis of the data put in from input equipment or the said control means under the computer program activated by controlling by the said control means and puts out the generated data to the said control means or output equipment : and an administration means which is provided for information communications between the said control means and computer means and makes operation administration including data processing for both the said control means and computer means.

The invention stated in the claim 2 is configured so that the said control means is equipped with a control program storage for storing a control program to control control equipment and a computer means having more than one computer functions ; a basic program storage for storing a program to execution process the said control program ; a control processor which reads out the control program from the said control program storage under the program stored in the basic program storage to execution process the control program ; and an interface which transfer processes a control input from a single or more than one pieces of control equipment and a control output to the control equipment.

The invention stated in the claim 3 is configured so that the said computer means is equipped with a computer program storage which stores more than one pieces of software produced by individually modularizing a single or more than one computer functions and is operated in individual modules ; a basic program storage which stores a basic program for executing a computer program stored in the computer program storage ; a computer function processor which reads out a computer program from the said computer program storage and execution processes it under the basic program stored in the basic program storage ; and an I/O interface for connecting I/O equipment and peripheral equipment.

The invention stated in the claim 4 is configured so that the basic program stored in the basic program storage in the said computer means includes a control program generating function and/or data monitoring function of the control means ; and a computer program generating function and/ or computer data monitoring function of the computer means ; or any one of these functions.

The invention stated in the claim 5 is configured so that the said administration means is equipped with a buffer which stores computer status information, control status information, computer function processing activating instruction, and controller function processing request, or any one of these data.

The function of this invention configured as stated above will be described here.

The control means in the programmable computer controller stated in the claim 1 provides a logical operation or other control operation using the input information from the control equipment and/or computer means as data under the control program stored and held, and puts out the result to the control equipment and/or computer means. The computer means, which generates data on the basis of the data put in from the input equipment or the said control means under the computer program activated by controlling by the said control means and puts out the generated data to the said control means or output equipment. The administration means makes operation administration including data processing for both the said control means and computer means.

With the invention stated in the claim 2, the said control means is equipped with a control program storage for storing a control program to control control equipment and a computer means having more than one computer functions ; a basic program storage for storing a program to execution process the said control program ; a control processor which reads out the control program from the said control program storage under the basic program stored in the basic program storage to execution process the control program ; and an interface which transfer processes a control input from a single or more than one pieces of control equipment and a control output to the control equipment, therefore, controlling the single or more than one pieces of control equipment which are connected to the interface by the operation of the control processor made on the said basic program and the control program or transferring of data or other as a control input from the control equipment to the computer means or other is performed smoothly.

With the invention stated in the claim 3, the said computer means is equipped with a computer program storage which stores more than one pieces of software produced by individually modularizing a single or more than one computer functions and is operated in individual modules ; a basic program storage which stores a basic program for executing a computer program stored in the computer program storage ; a computer function processor which reads out a computer program from the said computer program storage and execution process it under the basic program stored in the basic program storage ; and an I/O interface for connecting I/O equipment and peripheral equipment, therefore, controlling the I/O equipment and peripheral equipment connected to the I/O interface and transferring data or other to the said control means can be performed smoothly.

With the invention stated in the claim 4, the basic program stored in the basic program storage in the said computer means includes a control program generating function and/or data monitoring function of the control means ; and a computer program generating function and/or computer data monitoring function of the computer means ; or any one of these functions, therefore, with the computer means, the control program generating function and data monitoring function of the control means, and the computer program generating function and computer data monitoring function of the computer means, or any one of these functions can be executed.

With the invention stated in the claim 5, the said administration means is equipped with a buffer which stores computer status information, control status information, computer function processing activating instruction, and controller function processing request, or any one of these data, therefore, administrating of both the said control means and the computer means can be performed smoothly.

Here is a detailed description of the preferred embodiment of this invention.

The programmable computer controller 1 as shown in Fig. 1 has the control means 4, which provides a logical operation or other control operation using the input information from control equipment, such as the FA controller 2, and/or the later stated computer means 5 as data under the control program previously stored and held, and puts out the result to the said control equipment and/or computer means 5 ; the computer means 5 provided with more than one modularized computer functions that generates data on the basis of the data put in from input equipment, such as the keyboard 7, or the said control means 4 under the computer program activated by controlling by the said control means 4 and puts out the generated data to the said control means 4 or output equipment : and the communications information buffer 8 as an administration means which is provided for information communications between the said control means 4 and computer means 5 and makes operation administration including data processing for both the said control means 4 and computer means 5.

The said control means 4 is configured so that it is equipped with the control program storage 10 for storing a control program to selectively control control equipment, such as the FA controller 2, and the modularized functions of the computer means 5 having more than one modularized computer functions ; the basic program storage 9 for storing a program to execute the said control program ; the control processor 11 which reads out the control program from the said control program storage 10 under the program stored in the basic program storage 9 to execution process the control program ; and the interface 12 which transfer processes a control input from a single or more than one pieces of control equipment and a control output to the control equipment.

The said computer means 5 is equipped with the computer program storage 13 which stores more than one pieces of software produced by individually modularizing a single or more than one computer functions and is operated in individual modules ; the basic program storage 14 which stores a basic program for executing a computer program stored in the computer program storage 13 ; the computer function processor 15 which reads out a computer program from the said computer program storage 13 and executes it under the basic program stored in the basic program storage 14 ; and then I/O interface 19 for connecting I/O equipment, such as the said keyboard 7, printer 16, display 17, and external memory 18, and peripheral equipment.

The basic program stored in the basic program storage 14 in the said computer means 5 includes a control program generating function and/or data monitoring function of the control means 4 ; and a computer program generating function and/or computer data monitoring function of the computer means 5 ; or any one of these functions.

The communications information buffer 8 as the said administration means stores computer status information, control status information, computer function processing activating instruction, and control processor function processing request, or any one of these data, and transfers each of them to the control means 4 or the computer means 5.

Here is a more detailed description of the said control means 4, computer means 5, and communications information buffer 8.

The said control means 4 provides control of the computer functions of the computer means 5, and the control equipment, such as the FA controller 2. In addition, the said control means 4 receives a control processor function processing request from the said computer means 5, and then execution processes it and returns the processing result to the computer means 5.

The said control means 4 supplies the said computer means 5 with status information about data or other, such as data monitored by the control means 4, that is to be used with various functions of the computer means 5.

The control means 4 provides a computer function processing activating instruction and data transmission and reception associated with it through the communications information buffer 8 under the control program.

The computer means 5 activates the computer program, processes, and transfers the processing result to the control means 4 in accordance with the computer function processing instruction from the control means 5. In addition, the computer means 5 receives an input through the said input equipment, issues a control processor processing request, if the request content of the input is for the control means 4, and takes in the result of processing by the control means 4 to put out it through the output equipment, such as the display 17.

The said computer means 5 supplies the control means 4 with status information required for the control means 4 to operate the variety of functions of the computer means 5,such as "waiting for activating", "during activation", "impossible to be activated", and "fault" information, with the change in status of the computer means 5. The information is used with the control program as control data.

The said computer means 5 provides a request for control processing required for computer function processing and data transmission and reception associated with it through the communications information buffer 8.

The said communications buffer 8 consists of RAMs to assure immediate transfer of communications information between the control means 4 and the computer means 5, and concurrence of the data.

The computer function processing activating instruction and the control function processing request in the communications information buffer 8 are queue buffered to accommodate the asynchronism in execution of the control program by the control means 4 and that of the computer program by the computer means 5 so that the programs prepared are simplified.

The said computer means 5 can be provided with additional functions, such as a computer controller administration function (controller function processing request), i.e., a control program generating function (programmer function), data monitoring function (including setting, changing, and generating), and operation mode selecting function.

The said control program generating function causes the control means 4 to issue a processing request, such as that for program writing in or reading out, thus allowing the large storage capacity of the computer means 5 to be utilized to provide a function of storing programs and data associated with them. Thus, an environment in which programs and additional information associated with them, such as data names, are readily available is provided.

The said data monitoring function causes the control means 4 to issue a processing request, such as that for data writing in or reading out, thus allowing the large storage capacity of the computer means 5 to be utilized to provide a data storing function. Thus, an environment in which additional information, such as data names, is readily available is provided.

The said operation mode selecting function provides a function of selecting the offline or online mode, and in the offline mode, the operation mode of the computer means 5 can be the computer program generation mode or other, while that of the control means 4 can be the control program execution mode. In the online mode, the operation mode of the computer means 5 can be the control program generation mode or other, while that of the control means 4 can be the control program generation mode, or the operation mode of the computer means 5 can be the control program execution mode, while that of the control means can be the control program execution mode.

Here is a description of the operation of the programmable computer controller 1 configured as stated above.

The control processor in the control means 4 takes in input information from the control equipment, such as the FA controller 2, and/or the keyboard 7 or other connected to the I/O interface 19 in the computer means 4, and computer status information through the communications information buffer 8 as data on the basic program in the basic program storage 9, and makes control operation, such as the logical operation, under the control program stored in the control program storage 10 to put out the result to the control equipment, such as the FA controller 2, and/or the computer function processor 15 in the computer means 5 through the communications information buffer 8.

The computer function processor 15 in the computer means 5 generates data on the data put in from the input equipment, such as the said keyboard 7, or the said control means 4 under the computer program in the computer program storage 13 that is activated by controlling by the control means 4, and puts out the generated data to the said control means 4 or the output equipment, such as the printer 16 and display 17.

On the basis of these operations, the operator on the production line level at an FA factory, for example, which is equipped with the keyboard 7, display 17, and printer 16 connected to the computer means 5 can rapidly make changing or rewriting the program for FA equipment, such as a robot, or other sophisticated processing on the site through a simple operation with no need for skill. The program changed or rewritten on the site can be sent to the control means 4 to be stored for later use.

This invention is not limited to the above-stated embodiment, and permits various variants to be embodied within the scope of the claim.

This invention described in detail heretofore provides a programmable computer controller configured as stated above, offering the following advantages.

The invention stated in the claim 1 can offer a programmable computer controller suited for manufacturing administration with which, when the system is to be improved or changed, or a problem is encountered or found, even a person in charge of manufacturing administration on the site can easily service the system as with the PLC, thus the need for calling the programming specialist being eliminated.

The invention stated in the claim 2 can offer a programmable computer controller with which controlling a single or more than one pieces of control equipment which are connected to the interface by the operation of the control processor made on the said basic program and the control program or transferring of data or other as a control input from the control equipment to the computer means or other can be performed smoothly.

The invention stated in the claim 3 can offer a programmable computer controller with which controlling the I/O equipment and peripheral equipment connected to the I/O interface and transferring data or other to the said control means can be performed smoothly.

The invention stated in the claim 4 can offer a programmable computer controller with which the control program generating function and data monitoring function of the control means, and the computer program generating function and computer data monitoring function of the computer means, or any one of these functions can be executed.

The invention stated in the claim 5 can offer a programmable computer controller with which administrating of both the said control means and the computer means can be performed smoothly.

## Claims

1. A programmable computer controller which features having a control means, which provides a logical operation or other control operation using the input information from control equipment and/or computer means as data under the control program stored and held, and puts out the result to the control equipment and/or computer means ; a computer means, which generates data on the basis of the data put in from input equipment or the said control means under the computer program activated by controlling by the said control means and puts out the generated data to the said control means or output equipment : and an administration means which is provided for information communications between the said control means and computer means and makes operation administration including data processing for both the said control means and computer means.

2. The programmable computer controller as stated in the above claim 1 in which the said control means is equipped with a control program storage for storing a control program to control control equipment and a computer means having more than one computer functions ; a basic program storage for storing a program to execution process the said control program ; a control processor which reads out the control program from the said control program storage under the program stored in the basic program storage to execution process the control program ; and an interface which transfer processes a control input from a single or more than one pieces of control equipment and a control output to the control equipment.

3. The programmable computer controller as stated in the above claim 1 in which the said computer means is equipped with a computer program storage which stores more than one pieces of software produced by individually modularizing a single or more than one computer functions and is operated in individual modules ; a basic program storage which stores a basic program for executing a computer program stored in the computer program storage ; a computer function processor which reads out a computer program from the said computer program storage and execution processes it under the basic program stored in the basic program storage ; and an I/O interface for connecting I/O equipment and peripheral equipment.

4. The programmable computer controller as stated in the above claim 3 in which the basic program stored in the basic program storage in the said computer means includes a control program generating function and/or data monitoring function of the control means ; and a computer program generating function and/or computer data monitoring function of the computer means ; or any one of these functions.

5. The programmable computer controller as stated in the above claim 1 in which the said administration means is equipped with a buffer which stores computer status information, control status information, computer function processing activating instruction, and controller function processing request, or any one of these data.
